# EUROPEAN PATENT SPECIFICATION

(11) **EP 4 611 309 B1**
(45) Date of publication and mention of the grant of the patent: **21.10.2026**
(21) Application number: 23882270.4
(22) Date of filing: 11.09.2023
(51) Int. Cl.: H04L 9/32, G09C 1/00, H04L 9/40, H04L 9/08, H04L 9/06, H04L 9/30

(54) **AUTHENTICATION SYSTEM**
AUTHENTIFIZIERUNGSSYSTEM
SYSTÈME D'AUTHENTIFICATION

(30) Priority: 28.10.2022 JP 2022173274
(43) Date of publication of application: 03.09.2025
(73) Proprietor: National Institute of Information and Communications Technology, Koganei-shi, Tokyo 184-8795 (JP); MITSUBISHI ELECTRIC CORPORATION, Chiyoda-ku Tokyo 100-8310 (JP)
(72) Inventor: FUJIWARA Mikio, Koganei-shi, Tokyo 184-8795 (JP); KATO Go, Koganei-shi, Tokyo 184-8795 (JP); SASAKI Masahide, Koganei-shi, Tokyo 184-8795 (JP); TSURUMARU Toyohiro, Tokyo 100-8310 (JP)
(74) Representative: Reichert & Lindner Partnerschaft Patentanwälte
(86) International application number: PCT/JP2023/032938
(87) International publication number: WO 2024/090057

(56) References cited:
- JP-A- 2009 103 774
- JP-A- 2019 205 157
- US-A1- 2005 265 550
- US-A1- 2014 337 684

## Description

### Technical field

The invention relates to an authentication system for performing another party authentication and message authentication in a quantum key distribution network.

### Background Art

Quantum computers are actively being developed in countries across the world, and there is concern that cryptographic techniques currently in use in the Internet will be compromised. High performance of supercomputers also increases the risk of cryptographic techniques becoming compromised. With an aim to standardize next-generation encryption, the Applicant has been proceeding to assess encryption methods that are difficult to decipher even with quantum computers, but a final decision on an encryption method is yet to be reached. Further, whatever encryption method is used, there is no guarantee that the method will be secure in the future because an encryption method is secure in terms of computational complexity.

In contrast, quantum key distribution (QKD) enables information-theoretically secure transmission of random numbers to a remote location, and by combining QKD with a one-time pad (OTP), it is considered that cryptographic communication that may not be deciphered by any computer will become possible in the future. In order for a quantum key distribution network to be a truly information-theoretically secure infrastructure, authentication of a user (a base) needs to be performed in an information-theoretically secure manner.

For example, a Wegman-Carter (WC) authentication technique that enables another party authentication on a one-to-one basis in an information-theoretically secure manner has been proposed as prior art (Non-patent Literature 1). This prior art enables another party authentication that is information-theoretically secure by calculating a MAC value of text contents that has been exchanged in the last session by using a key shared in advance, transmitting the MAC value to another party, and confirming that the MAC value of each other is correct.

### Citations List

### Non-patent Literature

Non-patent Literature 1: M. N. Wegman and J. L. Carter, "New Hash Functions and Their Use in Authentication and Set Equality," Journal of Computer and System Sciences, 22, pp. 265-279, 1981.

### Patent Literature

US 2005/265550 A1 discloses additional background art.

### Summary of Invention

### Technical Problem

However, the above-described prior art requires a symmetric key, and when there are n users, the users must hold n (n - 1) / 2 types of keys. This makes key management complex.

Further, the quantum key distribution and OTP are not provided with a technology for message authentication after the another party authentication. For this reason, users need to perform authentication of integrity of a message of each other in an information-theoretically secure manner by using random numbers shared by QKD. However, when a conflict arises among transmission and reception users about the presence or absence of message falsification, genuineness of a transmission user or reception user may not be determined.

An object of the invention is to provide an authentication system that is capable of facilitating management of a key and determining the genuineness of a transmission user or a reception user.

### Solution to Problem

In order to solve the above problem, an authentication system according to the invention includes, in a quantum key distribution network, a transmission node of a transmission user who transmits a message, a reception node of a reception user who receives the message, and a management node that performs another party authentication and message authentication between users.

The transmission node includes an another party authentication requester, a secret datum transmitter, and a message authenticator. The another party authentication requester is configured to request the management node to perform another party authentication with the reception user. The secret datum transmitter is configured to generate a predetermined secret datum, encrypt the secret datum with an OTP, and transmit the secret datum that is encrypted to the management node. The message authenticator is configured to perform the message authentication.

The management node includes a secure communication controller, a secret datum receiver, a share transmitter, and a message authenticator. The secure communication controller is configured to instruct the reception node to start the another party authentication in response to a request from the transmission node. The secret datum receiver is configured to receive the secret datum that is encrypted from the transmission node and decrypt the secret datum that is encrypted. The share transmitter is configured to generate, from the secret datum, a polynomial and shares that are in accordance with a number of users using threshold secret sharing, encrypt a share of the reception user with an OTP, and transmit the share of the reception user that is encrypted to the reception node. The message authenticator is configured to perform the message authentication.

The reception node includes an another party authentication processor, a share receiver, and a message authenticator. The another party authentication processor is configured to start the another party authentication in response to an instruction from the management node. The share receiver is configured to receive the share of the reception user that is encrypted from the management node and decrypt the share of the reception user that is encrypted. The message authenticator is configured to perform the message authentication.

The transmission node includes a polynomial determiner. The polynomial determiner is configured to disclose the secret datum to the reception node and the management node via a public communication path that has been authenticated in advance by WC authentication, and check whether the polynomial holds.

The reception node includes a polynomial determiner. The polynomial determiner is configured to disclose the share of the reception user to the transmission node and the management node via the public communication path, and determine whether the polynomial holds.

The management node includes a polynomial determiner and an another party authentication determiner. The polynomial determiner is configured to disclose a share of the transmission user to the transmission node and the reception node via the public communication path, and determine whether the polynomial holds. The another party authentication determiner is configured to determine that the another party authentication is successful when the polynomial holds at the transmission node, the reception node, and the management node.

That is, in the authentication system, a management node that manages authentication in the quantum key distribution network is provided, and all nodes share an OTP key pair with the management node, making key management easy. In the authentication system, another party authentication and message authentication that are information-theoretically secure may be performed with all the nodes using the WC authentication, and genuineness of the transmission user or the reception user may be determined.

### Advantageous Effects of Invention

According to the invention, a key may be easily managed, and genuineness of the transmitting user or the receiving user may be determined.

### Brief Description of Drawings

[FIG. 1] FIG. 1 is a block diagram showing a configuration related to another party authentication in an authentication system according to a first embodiment.
[FIG. 2] FIG. 2 is a block diagram showing a configuration related to message authentication in the authentication system according to the first embodiment:
   [FIG. 3] FIG. 3 is a sequence diagram showing an operation of another party authentication in the authentication system according to the first embodiment.
   [FIG. 4] FIG. 4 is an explanatory diagram for explaining a checking method of a linear polynomial in the first embodiment.
   [FIG. 5] FIG. 5 is a sequence diagram showing an operation of message authentication in the authentication system according to the first embodiment.
   [FIG. 6] FIG. 6 is a block diagram showing a configuration related to message authentication in an authentication system according to a second embodiment.
   [FIG. 7] FIG. 7 is a sequence diagram showing an operation of message authentication in the authentication system according to the second embodiment.
   [FIG. 8] FIG. 8 is a conceptual diagram of a quantum key distribution network in an example.

### Description of Embodiments

Hereinafter, embodiments of the invention will be described with reference to the drawings. The embodiments described below are intended to embody a technical idea of the invention, and the invention is not limited to the following embodiments unless otherwise specified. The same means are denoted by the same reference signs, and description thereof may be omitted to avoid repetition.

### (First Embodiment)

### [Configuration of Authentication System]

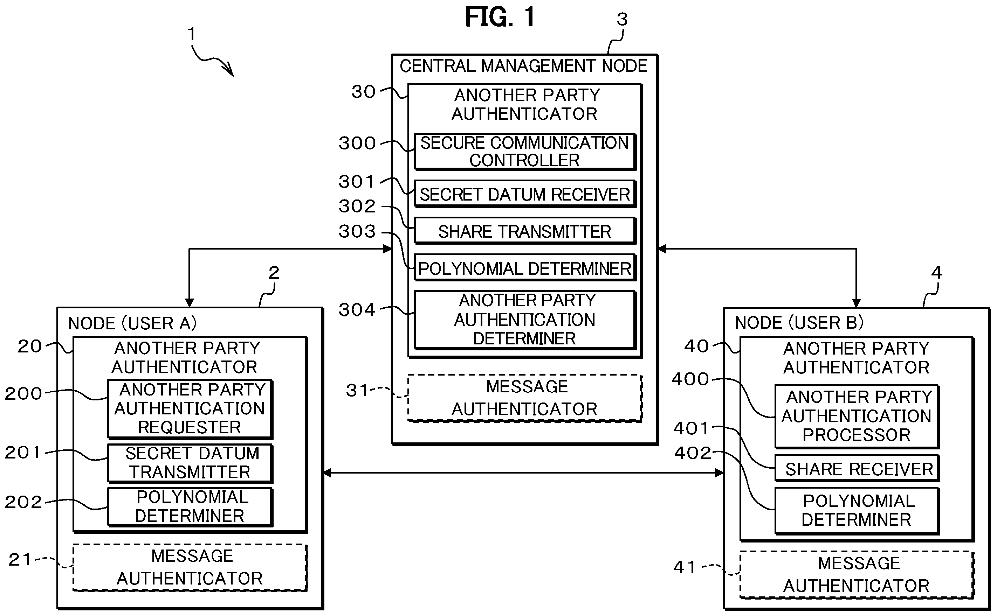

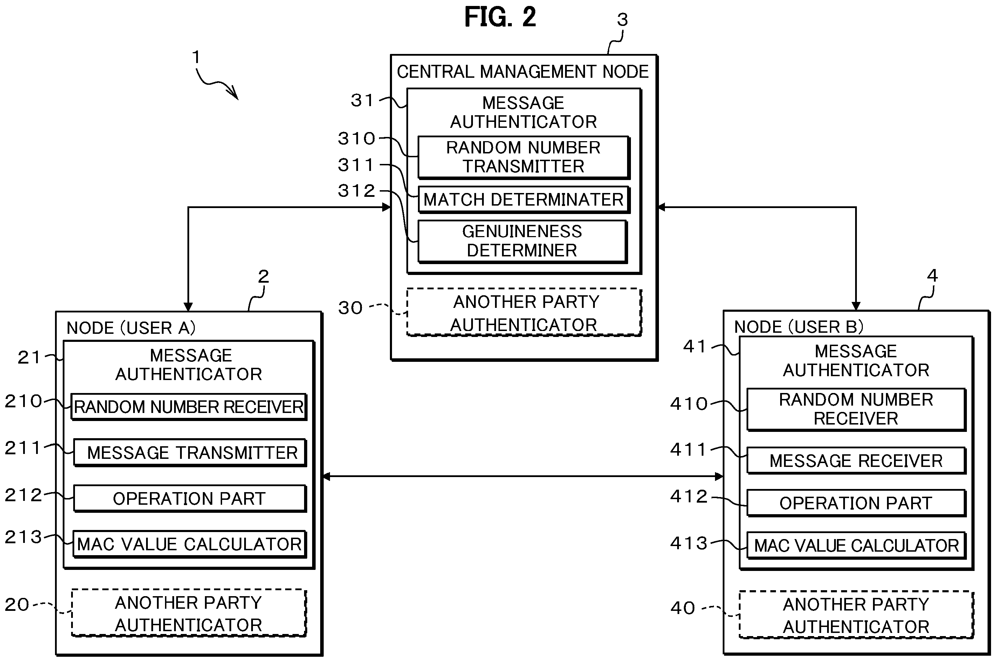

A configuration of an authentication system 1 according to a first embodiment will be described with reference to FIGS. 1 and 2.

As illustrated in FIG. 1, the authentication system 1 includes the following nodes in a quantum key distribution network: a node (transmission node) 2 of a transmission user who transmits a message; a node (reception node) 4 of a reception user who receives the message; and a central management node (management node) 3 that performs another party authentication and message authentication between users.

Hereinafter, a transmission user who transmits a message may be referred to as "user A" and a reception user who receives the message may be referred to as "user B". Further, the transmission node and the reception node may simply be referred to as "nodes".

The authentication system 1 realizes another party authentication in an information-theoretically secure manner with a small number of key pairs. To achieve this, the authentication system 1 places a central management node 3 that manages authentication within the quantum key distribution network, and all users share a key pair with the central management node 3. The central management node may realize another party authentication that is information-theoretically secure by performing WC authentication with all the users (nodes). Further, after the another party authentication is complete, the authentication system 1 performs message authentication of a message transmitted and received between the users.

It is assumed that the central management node 3 is reliable and implementation for preventing leakage of key information is in place.

In the authentication system 1, the node 2, central management node 3, and node 4 are connected to each other via a quantum key distribution network. Unlike an open network such as the Internet, the quantum key distribution network is a closed network. In the authentication system 1, the node 2, central management node 3, and node 4 are connected to each other via a public communication path (not illustrated) that has been authenticated in advance using WC authentication.

A configuration of each device of the authentication system 1 will be described below. To keep the drawings simple, FIG. 1 is shown with details of a message authenticator being omitted (a configuration of the message authenticator is shown schematically using a broken line), and FIG. 2 is shown with details of an another party authenticator being omitted (a configuration of the another party authenticator is shown schematically using a broken line). That is, FIGS. 1 and 2 show the same devices. In FIG. 1, components of the another party authenticator 20, 30, 40 are shown with solid lines and the message authenticator 21, 31, 41 is shown with a broken line and with components thereof omitted. In FIG. 2, components of the message authenticator 21, 31, 41 are shown with solid lines and the another party authenticator 20, 30, 40 is shown with a broken line and with components thereof omitted.

### <Transmitter Node>

The node 2 includes an another party authenticator 20 that performs another party authentication and a message authenticator 21 that performs message authentication.

As shown in FIG. 1, the another party authenticator 20 includes an another party authentication requester 200, a secret datum transmitter 201, and a polynomial determiner 202.

The another party authentication requester 200 is configured to request the central management node 3 to perform another party authentication with the user B.

The secret datum transmitter 201 is configured to generate a predetermined secret datum, encrypt the secret datum with an OTP, and transmit the encrypted secret datum to the central management node 3.

The polynomial determiner 202 is configured to disclose the secret datum to the node 4 and the central management node 3 via a public communication path that has been authenticated in advance with WC authentication and check whether a polynomial holds.

As shown in FIG. 2, the message authenticator 21 includes a random number receiver 210, a message transmitter 211, an operation part 212, and a MAC value calculator 213.

The random number receiver 210 is configured to receive a first random number and a second random number that are encrypted from the central management node 3 and decrypt the first random number and the second random number that are encrypted.

The message transmitter 211 is configured to encrypt a message with an OTP and transmit the encrypted message to the node 4.

The operation part 212 is configured to calculate, from the message, a first message authentication code value (a first MAC value) using the first random number and a hash value using a cryptographic hash function such as a secure hash algorithm (SHA). Further, the operation part 212 is configured to perform a concatenation operation or an exclusive or operation on the first MAC value and the hash value, encrypt an operation result with an OTP, and transmit the encrypted operation result to the central management node 3.

The MAC value calculator 213 is configured to calculate from the message a second MAC value using the second random number. Further, the MAC value calculator 213 is configured to encrypt the second MAC value with an OTP, and transmit the encrypted second MAC value to the central management node 3.

Specific processing details of the node 2 will be described later.

### <Central Management Node>

The central management node 3 includes an another party authenticator 30 that performs another party authentication and a message authenticator 31 that performs message authentication.

As shown in FIG. 1, the another party authenticator 30 includes a secure communication controller 300, a secret datum receiver 301, a share transmitter 302, a polynomial determiner 303, and an another party authentication determiner 304.

The secure communication controller 300 is configured to instruct the node 4 to start another party authentication in response to a request from the node 2.

The secret datum receiver 301 is configured to receive the secret datum that is encrypted from the node 2 and decrypt the secret datum that is encrypted.

The share transmitter 302 is configured to generate from the secret datum a polynomial and shares in accordance with a number of users by using threshold secret sharing. Further, the share transmitter 302 is configured to encrypt a share of the user B with an OTP and transmit the encrypted share of the user B to the node 4.

The polynomial determiner 303 is configured to disclose, via the public communication path, a share of the user A to the node 2 and node 4 and determine whether the polynomial holds.

The another party authentication determiner 304 is configured to determine that the another party authentication is successful when the polynomial holds at the node 2, node 4, and central management node 3.

As shown in FIG. 2, the message authenticator 31 includes a random number transmitter 310, a match determiner 311, and a genuineness determiner 312.

The random number transmitter 310 is configured to generate the first random number, the second random number, and a third random number, encrypt the first random number, the second random number, and the third random number with an OTP, transmit the first random number and the second random number that are encrypted to the node 2, and transmit the first random number and the third random number that are encrypted to the node 4.

The match determiner 311 is configured to receive operation results, the second MAC value, and a third MAC value from the node 2 and the node 4, decrypt the operation results, the second MAC value, and the third MAC value, determine whether the message authentication is successful based on the operation results, the second MAC value, and the third MAC value that have been received.

When a notification indicating that messages do not match is received from at least one of the node 2 or the node 4, the genuineness determiner 312 is configured to recalculate the first MAC value, the second MAC value, the third MAC value, and the hash value from the messages received from the node 2 and the node 4, and determine genuineness of a user based on a result of the recalculation.

Specific processing details of the central management node 3 will be described later.

### <Reception Node>

The node 4 includes an another party authenticator 40 that performs another party authentication and a message authenticator 41 that performs message authentication.

As shown in FIG. 1, the another party authenticator 40 includes an another party authentication processor 400, a share receiver 401, and a polynomial determiner 402.

The another party authentication processor 400 is configured to start another party authentication in response to an instruction from the central management node 3.

The share receiver 401 is configured to receive the encrypted share of the user B from the central management node 3 and decrypt the encrypted share of the user B.

The polynomial determiner 402 is configured to disclose the share of the user B to the node 2 and the central management node 3 via the public communication path and determine whether the polynomial holds.

As shown in FIG. 2, the message authenticator 41 includes a random number receiver 410, a message receiver 411, an operation part 412, and a MAC value calculator 413.

The random number receiver 410 is configured to receive the first random number and the third random number that are encrypted from the central management node 3 and decrypt the first random number and the third random number that are encrypted.

The message receiver 411 is configured to receive a message that is encrypted from the node 2 and decrypt the message that is encrypted.

The operation part 412 is configured to calculate from the received message a first MAC value using the first random number and a hash value using a cryptographic hash function such as SHA. Further, the operation part 412 is configured to perform a concatenation operation or an exclusive or operation on the first MAC value and the hash value, encrypt an operation result with an OTP, and transmit the encrypted operation result to the central management node 3.

The MAC value calculator 413 is configured to calculate from the message the third MAC value using the third random number, encrypt the third MAC value with an OTP, and transmit the encrypted third MAC value to the central management node 3.

Specific processing details of the node 4 will be described later.

### [Operation of Authentication System: Another Party Authentication]

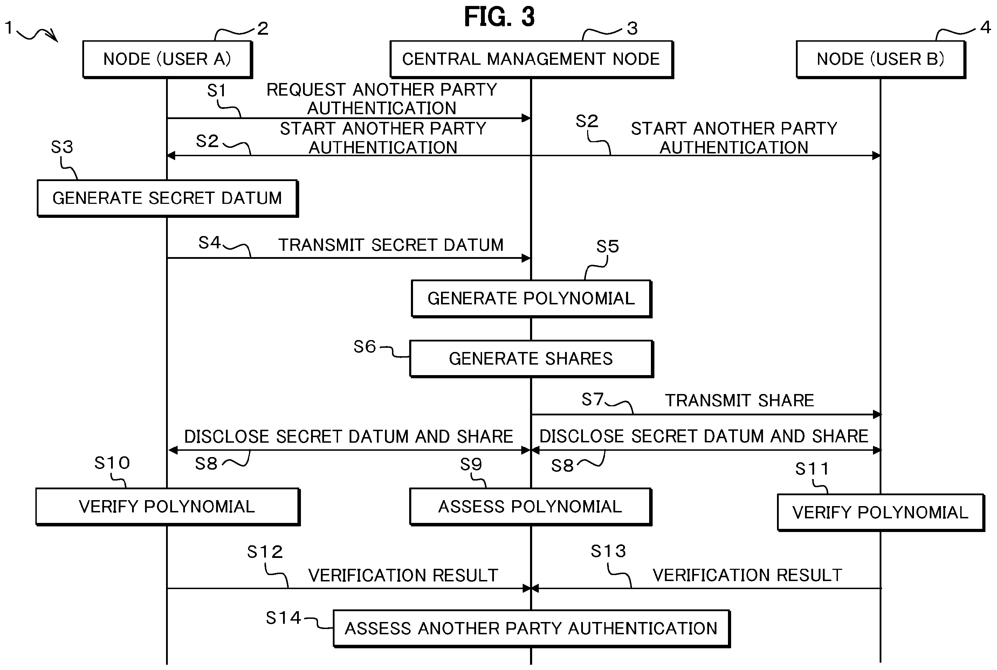

An operation of the authentication system 1 when performing another party authentication will be described with reference to FIG. 3 (see FIG. 1 as appropriate).

As shown in FIG. 3, in step S1, when the node 2 wants to perform secure communication between the users A and B in the quantum key distribution network, the another party authentication requester 200 of the node 2 requests the central management node 3 for another party authentication with the user B.

In step S2, in response to the request from the node 2, the secure communication controller 300 of the central management node 3 notifies the node 2 of a start of the another party authentication with the user B and instructs the node 4 to start the another party authentication.

In step S3, the secret datum transmitter 201 of the node 2 generates a secret datum S by a known method. Then, the secret datum transmitter 201 encrypts the secret datum S with an OTP.

For example, in the authentication system 1, Vernam's one time pad encryption may be used as the OTP. In the case of encryption by an OTP, an encryption key is shared in advance between a sender and a receiver of data. In the authentication system 1, instead of the OTP, encryption may be performed using standardized symmetric key encryption such as Advanced Encryption Standard (AES) with a key obtained from the quantum key distribution network.

In step S4, the secret datum transmitter 201 of the node 2 transmits the secret datum S that is encrypted to the central management node 3 via the quantum key distribution network. Then, the secret datum receiver 301 of the central management node 3 receives the encrypted secret datum S from the node 2 and decrypts the encrypted secret datum S with the OTP.

In step S5, the share transmitter 302 of the central management node 3 generates a polynomial in accordance with a number of users by using threshold secret sharing (for example, Shamir's secret sharing). In the present embodiment, because there are users A and B and the number of users is two, the share transmitter 302 sets a threshold value of the threshold secret sharing to 2 and generates a linear polynomial. The share transmitter 302 may, instead of Shamir's secret sharing, use secret sharing based on an exclusive or operation.

Reference Literature 1: Shamir, Adi, "How to share a secret", Communications of the ACM, Volume 22, Issue 11, Nov. 1979, pp. 612-613

In step S6, the share transmitter 302 of the central management node 3 generates shares in accordance with the number of users by using threshold secret sharing. For example, the share transmitter 302 generates a share for each of the users A and B. Then, the share transmitter 302 encrypts the share of the user B with an OTP.

In step S7, the share transmitter 302 of the central management node 3 transmits the encrypted share of the user B to the node 4 via the quantum key distribution network. Then, the share receiver 401 of the node 4 receives the encrypted share of the user B from the central management node 3 and decrypts the encrypted share of the user B with the OTP.

In step S8, the polynomial determiner 202 of the node 2 discloses the secret datum S to the node 4 and the central management node 3 via the public communication path.

The polynomial determiner 303 of the central management node 3 discloses the share of the user A to the node 2 and the node 4 via the public communication path.

The polynomial determiner 402 of the node 4 discloses the share of the user B to the node 2 and the central management node 3 via the public communication path.

In step S9, the polynomial determiner 303 of the central management node 3 determines whether the linear polynomial holds.

In step S10, the polynomial determiner 202 of the node 2 verifies whether the linear polynomial holds.

In step S11, the polynomial determiner 402 of the node 4 verifies whether the linear polynomial holds.

### <Method of Determining Whether Linear Polynomial Holds and Method of Verifying Whether Linear Polynomial Holds>

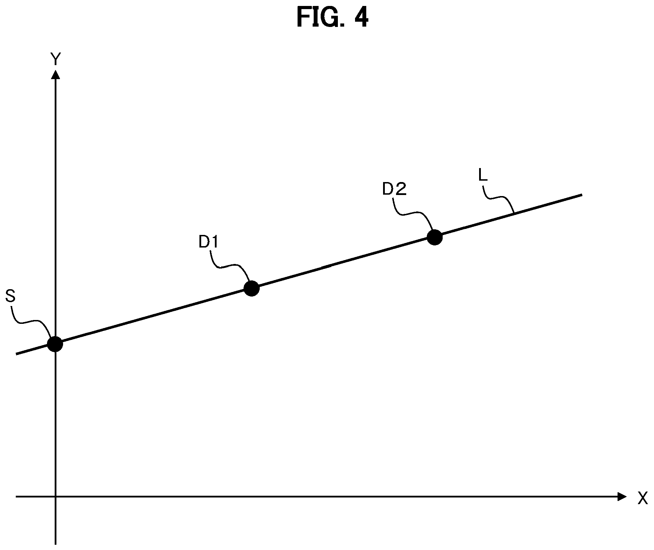

A method of determining whether a linear polynomial holds and a method of verifying whether the linear polynomial holds that are used by the polynomial determiners 202, 303, and 402 will be described with reference to FIG. 4.

FIG. 4 shows a straight line L representing an example of the linear polynomial. FIG. 4 shows the secret datum S, the share D1 of the user A, and the share D2 of the user B. The X-axis shown in FIG. 4 represents a position of each node. For example, X = 0 for the central management node 3, X = 1 for the node 2, and X = 2 for the node 4. The Y-axis shown in FIG. 4 represents numerical values of the secret datum S and the shares D1 and D2.

As shown in FIG. 4, the polynomial determiner 303 determines that the linear polynomial holds when the disclosed secret datum S, the disclosed share D2 of the user B, and the disclosed share D1 of the user A are all positioned on the straight line L. The polynomial determiner 303 determines that the linear polynomial does not hold when any one or more of the disclosed secret datum S, the disclosed share D2 of the user B, and the disclosed share D1 of the user A are not positioned on the straight line L.

Then, the polynomial determiner 303 notifies the polynomial determiners 202 and 402 of a result of the determination on whether the linear polynomial holds. Then, the polynomial determiners 202 and 402 verify the result of the determination on whether the linear polynomial holds that has been determined by the polynomial determiner 303.

Returning to FIG. 3, description of the operation of the authentication system 1 will be continued.

In step S12, the polynomial determiner 202 of the node 2 transmits a result of the verification of the linear polynomial to the central management node 3 via the public communication path.

In step S13, the polynomial determiner 402 of the node 4 transmits a result of the verification of the linear polynomial to the central management node 3 via the public communication path.

In step S14, the another party authentication determiner 304 of the central management node 3 determines that the another party authentication is successful when the polynomial holds at the node 2, node 4, and central management node 3. That is, the another party authentication determiner 304 determines that the another party authentication is successful when the linear polynomial holds in step S9 and verification confirms that the linear polynomial holds in steps S10 and S11. When the another party authentication is successful, the authentication system 1 performs message authentication.

When it is determined that the linear polynomial does not hold in one or more of steps S9, S10, and S11, the another party authentication determiner 304 determines that the another party authentication has failed. That is, the another party authentication determiner 304 determines that the another party authentication has failed when the linear polynomial does not hold in step S9 or when a verification does not confirm that the linear polynomial holds in step S10 or S11.

When the another party authentication is successful, secure communication may be performed between the node 2 and node 4 in the authentication system 1. In this case, a random number that is common to A and B may be shared by a key relay by requesting the central management node 3 in advance.

### [Operation of Authentication System: Message Authentication]

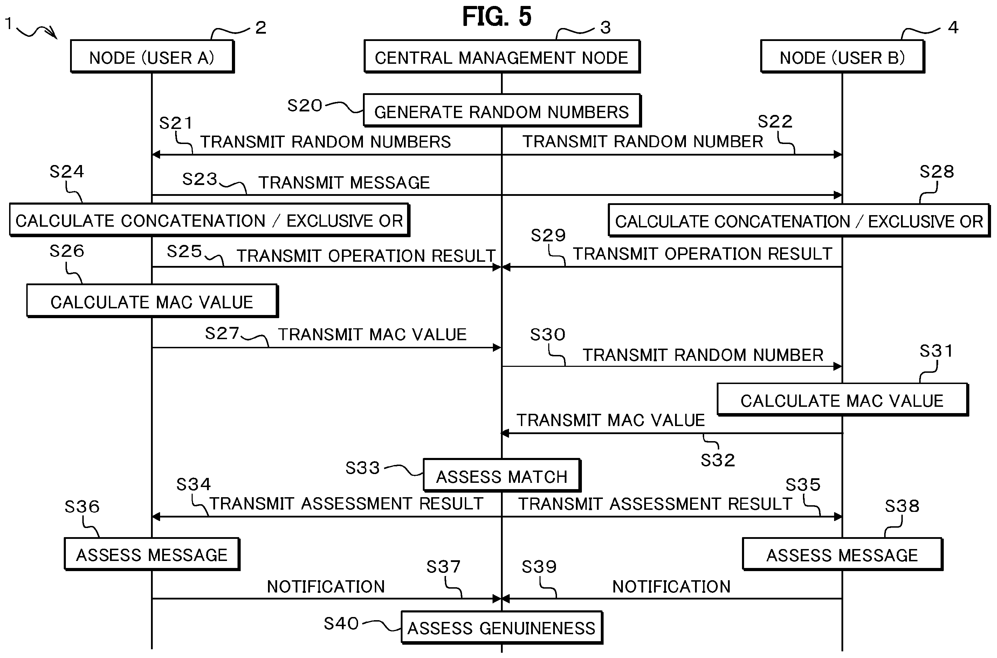

An operation of the authentication system 1 for message authentication will be described with reference to FIG. 5 (see FIG. 2 as appropriate).

As shown in FIG. 5, in step S20, the random number transmitter 310 of the central management node 3 generates a first random number R1, a second random number R2, and a third random number R3 by a known method.

In step S21, the random number transmitter 310 of the central management node 3 encrypts the first random number R1 and the second random number R2 with an OTP. Then, the random number transmitter 310 transmits the first random number R1 and the second random number R2 that are encrypted to the node 2 via the quantum key distribution network. Then, the random number receiver 210 of the node 2 receives the first random number R1 and the second random number R2 that are encrypted from the central management node 3 and decrypts the received first random number R1 and the second random number R2 with the OTP.

In step S22, the random number transmitter 310 of the central management node 3 encrypts the first random number R1 with an OTP. Then, the random number transmitter 310 transmits the first random number R1 that is encrypted to the node 4 via the quantum key distribution network. Then, the random number receiver 410 of the node 4 receives the first random number R1 that is encrypted from the central management node 3 and decrypts the received first random number R1 with the OTP.

In step S23, the message transmitter 211 of the node 2 encrypts a message m with an OTP. Then, the message transmitter 211 transmits the message m that is encrypted to the node 4 via the quantum key distribution network. Hereinafter, a message received by the node 4 may be referred to as a message m'. Then, the message receiver 411 of the node 4 receives the message m' that is encrypted from the node 2 and decrypts the received message m' with the OTP.

In step S24, the operation part 212 of the node 2 calculates, from the message m, a first MAC value h _{R1} (m) using the first random number R1. The first MAC value h _{R1} (m) is a keyed hash value using the first random number R1. For example, the operation part 212 calculates a hash value h _{SHA3} (m) from the message m using SHA-3, which is a cryptographic hash function. In the authentication system 1, SHA-2 may be used as the cryptographic hash function instead of SHA-3.

Subsequently, the operation part 212 performs a concatenation operation h _{R1} (m) | h _{SHA3} (m) or an exclusive or operation h _{R1} (m) EOR h _{SHA3} (m) on the first MAC value h _{R1} (m) and the hash value h _{SHA3} (m). Here, an administrator of the authentication system 1 may set which operation is to be performed, the concatenation operation or the exclusive or operation. For example, when the operation that is performed is exclusive or, an amount of memory may be saved by about half, and when the operation that is performed is concatenation, subsequent verification may be facilitated.

Thereafter, the operation part 212 encrypts a result of the operation that is performed with an OTP.

In step S25, the operation part 212 of the node 2 transmits the operation result that is encrypted to the central management node 3 via the quantum key distribution network. Then, the match determiner 311 of the central management node 3 receives the operation result that is encrypted from the node 2 and decrypts the received operation result with the OTP.

In step S26, the MAC value calculator 213 of the node 2 calculates, from the message m, a second MAC value h _{R2} (m) using the second random number R2. Then, the MAC value calculator 213 encrypts the calculated second MAC value h _{R2} (m) with an OTP.

In step S27, the MAC value calculator 213 of the node 2 transmits the second MAC value h _{R2} (m) that is encrypted to the central management node 3 via the quantum key distribution network. Then, the match determiner 311 of the central management node 3 receives the second MAC value h _{R2} (m) that is encrypted from the node 2 and decrypts the received second MAC value h _{R2} (m) with the OTP.

In step S28, the operation part 412 of the node 4 calculates, from the message m', a first MAC value h _{R1} (m') using the first random number R1. The operation part 412 calculates a hash value h _{SHA3} (m') from the message m' using SHA-3. In one or more embodiments, SHA-2 may be used instead of SHA-3.

Subsequently, the operation part 412 performs a concatenation operation h _{R1} (m') | h _{SHA3} (m') or an exclusive or operation h _{R1} (m') EOR h _{SHA3} (m') on the first MAC value h _{R1} (m') and the hash value h _{SHA3} (m'). The operation that is performed, the concatenation operation or the exclusive or operation, is matched with the operation performed by the operation part 212 of the node 2. Then, the operation part 412 encrypts a result of the operation with an OTP.

In step S29, the operation part 412 of the node 4 transmits the operation result that is encrypted to the central management node 3 via the quantum key distribution network. Then, the match determiner 311 of the central management node 3 receives the operation result that is encrypted from the node 4 and decrypts the received operation result with the OTP.

In step S30, the random number transmitter 310 of the central management node 3 encrypts the third random number R3 with an OTP. The random number transmitter 310 transmits the third random number R3 that is encrypted to the node 4 via the quantum key distribution network. Then, the random number receiver 410 of the node 4 receives the third random number R3 that is encrypted from the central management node 3 and decrypts the third random number R3 that is encrypted with the OTP.

In step S31, the MAC value calculator 413 of the node 4 calculates, from the message m', a third MAC value h _{R3} (m') using the third random number R3. Then, the MAC value calculator 413 encrypts the calculated third MAC value h _{R3} (m') with an OTP.

In step S32, the MAC value calculator 413 of the node 4 transmits the third MAC value h _{R3} (m') that is encrypted to the central management node 3 via the quantum key distribution network. Then, the match determiner 311 of the central management node 3 receives the third MAC value h _{R3} (m') that is encrypted from the node 4 and decrypts the received third MAC value h _{R3} (m')with the OTP.

In step S33, when there is a request from the node 2 or the node 4 for a determination on a message mismatch, the match determiner 311 of the central management node 3 determines whether the operation results received from the node 2 and the node 4 match. That is, when the operation is concatenation, the match determiner 311 determines whether the concatenation h _{R1} (m) | h _{SHA3} (m) of the node 2 and the concatenation h _{R1} (m') | h _{SHA3} (m') of the node 4 match. When the operation is exclusive or, the match determiner 311 determines whether the exclusive or h _{R1} (m) EOR h _{SHA3} (m) of the node 2 and the exclusive or h _{R1} (m') EOR h _{SHA3} (m') of the node 4 match.

When the operations results of the node 2 and the node 4 match, the match determiner 311 determines that the message authentication has been successful.

When the operation results of the node 2 and the node 4 do not match, the match determiner 311 determines that the message authentication has failed.

In step S34, the match determiner 311 of the central management node 3 transmits a result of the determination on the message authentication to the node 2 via the public communication path.

In step S35, the match determiner 311 of the central management node 3 transmits the result of the determination on the message authentication to the node 4 via the public communication path.

In step S36, the operation part 212 of the node 2 determines whether the message m of the node 2 and the message m' of the node 4 match.

In step S37, when the messages m and m' do not match, the operation part 212 of the node 2 notifies the central management node 3 of the fact via the public communication path.

In step S38, the operation part 412 of the node 4 determines whether the message m of the node 2 and the message m' of the node 4 match.

In step S39, when the messages m and m' do not match, the operation part 412 of the node 4 notifies the central management node 3 of the fact via the public communication path.

In step S40, when the central management node 3 receives a notification that the messages m and m' do not match, the genuineness determiner 312 of the central management node 3 instructs the node 2 and the node 4 to send the message to the node 3, and recalculates the first MAC value, the second MAC value, the third MAC value, and the hash value. Here, a message newly received from the node 2 is referred to as a message m⁻ and a message newly received from the node 4 is referred to as a message m⁻'.

Then, the genuineness determiner 312 checks whether there is a MAC value or a hash value that does not match the value received by the central management node 3 and determines which of the users A and B is correct. The determination criteria are as follows.

Criterion A) When the concatenation operation is performed, h _{R1} (m) | h _{SHA3} (m) = h _{R1} (m⁻) | h _{SHA3} (m⁻), and h _{R2} (m) = h _{R2} (m⁻), and h _{R3} (m') = h _{R3} (m⁻).

When the exclusive or operation is performed, h _{R1} (m) EOR h _{SHA3} (m) = h _{R1} (m⁻) EOR h _{SHA3} (m⁻), and h _{R2} (m) = h _{R2} (m⁻), and h _{R3} (m') = h _{R3} (m⁻).

Criterion B) When the concatenation operation is performed, h _{R1} (m') | h _{SHA3} (m') = h_{R1} (m⁻') | h _{SHA3} (m⁻'), and h _{R3} (m') = h _{R3} (m⁻'), and h _{R2} (m) = h _{R2} m⁻').

When the exclusive or operation is performed, h _{R1} (m') EOR h _{SHA3} (m') = h _{R1} (m⁻') EOR h _{SHA3} (m⁻'), and h _{R3} (m') = h _{R3} (m⁻'), and h _{R2} (m) = h _{R2} (m⁻').

Here, when both criteria A and B are true or false, the genuineness determiner 312 determines that it is unclear which of the users A and B is correct. If only criterion A is true, the genuineness determiner 312 determines that the user A is correct. If only criterion B is true, the genuineness determiner 312 determines that the user B is correct. Thereafter, the genuineness determiner 312 may notify the users A and B of the determination result.

### [Effects]

As described above, according to the authentication system 1 of the first embodiment, the key may be easily managed, and the genuineness of the users A and B may be determined.

In the authentication system 1, another party authentication between users (nodes) that are not adjacent to each other may be performed in an information-theoretically secure manner. In the authentication system 1, the central management node 3 may be present at a completion of the another party authentication, and this may prevent service repudiation such as a denial of a fact by a user after the fact has occurred. That is, the authentication system 1 may not only ensure information-theoretical security of an authentication process of the quantum key distribution network, but may also facilitate business such as charging. Further, in the authentication system 1, the central management node 3 may ensure the integrity of a message exchanged between users.

### (Second Embodiment)

### [Configuration of Authentication System]

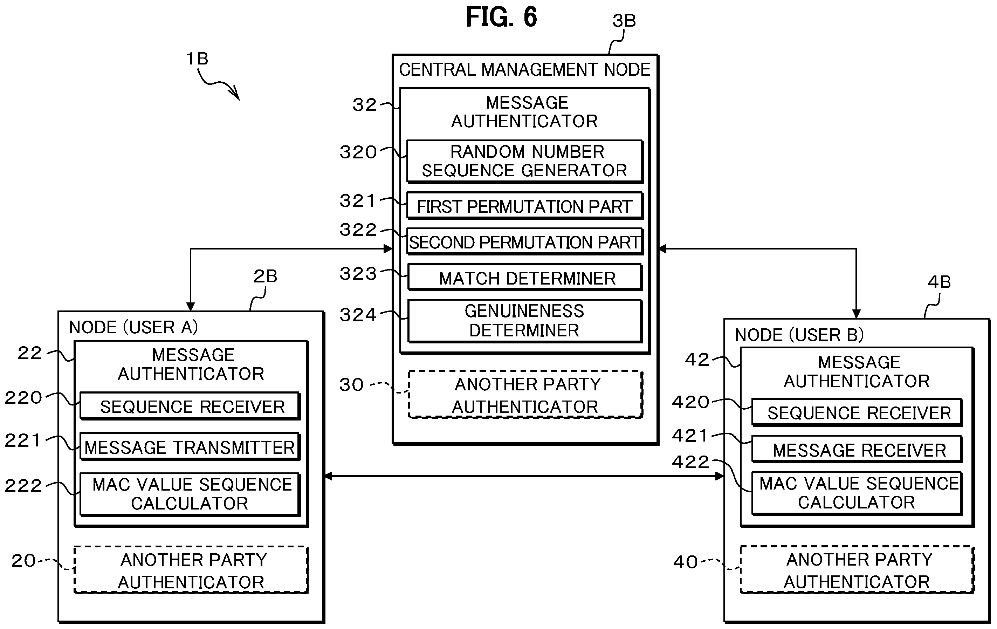

With reference to FIG. 6, a configuration of an authentication system 1B according to a second embodiment will be described with a focus on points that differ from the first embodiment.

As illustrated in FIG. 6, the authentication system 1 includes a node (transmission node) 2B, a node (reception node) 4B, and a central management node (management node) 3B in a quantum key distribution network.

In the authentication system 1B, a method of message authentication is different from that of the first embodiment, but a method of another party authentication is the same as that of the first embodiment. That is, the another party authenticators 20, 30, and 40 are the same as those in the first embodiment, and thus, description thereof will be omitted. Further, details of the another party authenticators 20, 30, and 40 (illustrated by a broken line) are omitted in FIG. 6 to keep the drawing concise.

### <Transmitter Node>

The node 2B includes an another party authenticator 20 that performs another party authentication and a message authenticator 22 that performs message authentication.

The message authenticator 22 includes a sequence receiver 220, a message transmitter 221, and a MAC value sequence calculator 222.

The sequence receiver 220 is configured to receive an encrypted sequence of numbers of the user A from the central management node 3B and decrypt the encrypted sequence of numbers of the user A.

The message transmitter 221 is configured to encrypt a message with an OTP and transmit the encrypted message to the node 4B.

The MAC value sequence calculator 222 is configured to calculate a first MAC value sequence from the message by using the sequence of numbers of the user A, encrypt the calculated first MAC value sequence with an OTP, and transmit the encrypted first MAC value sequence to the central management node 3B.

Specific processing details of the node 2B will be described later.

### <Central Management Node>

The central management node 3B includes an another party authenticator 30 that performs another party authentication and a message authenticator 32 that performs message authentication.

The message authenticator 32 includes a random number sequence generator 320, a first permutation part 321, a second permutation part 322, a match determiner 323, and a genuineness determiner 324.

The random number sequence generator 320 is configured to generate a random number sequence.

The first permutation part 321 is configured to: set in advance functions of identifying a permutation in which the number of matching elements is equal to the number of non-matching elements for the user A and the user B; convert a random number sequence into a sequence of numbers by the function of identifying a permutation of the user A; encrypt, by an OTP, the sequence of numbers of the user A to which the random number sequence has been converted; and transmit the encrypted sequence of numbers of the user A to the node 4B.

The second permutation part 322 is configured to: convert a random number sequence into a sequence of numbers by using the function of identifying a permutation of the user B; encrypt, by an OTP, the sequence of numbers of the user B to which the random number sequence has been converted; and transmit the encrypted sequence of numbers of the user B to the node 4B. Hereinafter, the function of identifying a permutation may be abbreviated as a permutation function.

The match determiner 323 is configured to: receive the first MAC value sequence and the second MAC value sequence from the node 2B and the node 4B; decrypt the received first MAC value sequence and second MAC value sequence; and determine whether message authentication has succeeded depending on whether elements of the first MAC value sequence and elements of the second MAC value sequence all match.

When a notification that the messages do not match is received from at least one of the node 2B or the node 4B, the genuineness determiner 324 is configured to: recalculate the first MAC value sequence and the second MAC value sequence from the messages received from the node 2B and node 4B; and determine genuineness of a user based on a result of the recalculation.

Specific processing details of the central management node 3B will be described later.

### <Reception Node>

The node 4B includes an another party authenticator 40 that performs another party authentication and a message authenticator 42 that performs message authentication.

The message authenticator 42 includes a sequence receiver 420, a message receiver 421, and a MAC value sequence calculator 422.

The sequence receiver 420 is configured to receive the encrypted sequence of numbers of the user B from the central management node 3B and decrypt the encrypted sequence of numbers of the user B.

The message receiver 421 is configured to receive a message that is encrypted from the node 2B and decrypt the message that is encrypted.

The MAC value sequence calculator 422 is configured to: calculate a second MAC value sequence from the received message by using the sequence of numbers of the user B; encrypt the second MAC value sequence that has been calculated with an OTP; and transmit the second MAC value sequence that is encrypted to the central management node 3B.

Specific processing details of the node 4B will be described later.

### [Operation of Authentication System: Message Authentication]

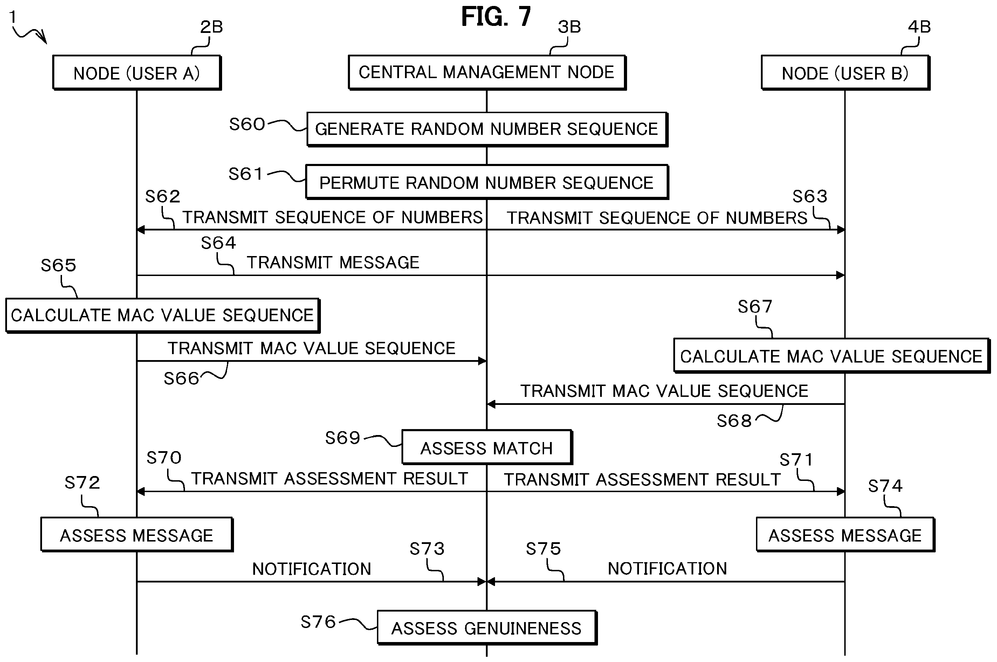

An operation of the authentication system 1B for message authentication will be described with reference to FIG. 7 (see FIG. 6 as appropriate). It is assumed that the another party authentication has been successful.

As illustrated in FIG. 7, in step S60, the random number sequence generator 320 of the central management node 3B generates a random number sequence R₁, R₂, ..., R₃ₙ (where n is an integer greater than or equal to 2).

In step S61, the first permutation part 321 of the central management node 3B converts a random number sequence R₁, R₂, ..., R₂ₙ into a sequence of numbers R^{A}₁ = R_{σA(1)}, R^{A}₂ = R_{σA(2)}, ..., R^{A}₂ₙ = R_{σA(2n)} by a permutation function σA of the user A.

Further, the second permutation part 322 of the central management node 3B converts a random number sequence R₁, R₂, ..., Rₙ, R_{2n + 1}, R_{2n + 2}, ..., R₃ₙ into a sequence of numbers R^{B}₁ = R _{σB(1)}, R^{B}₂ = R _{σB(2)}, ..., R^{B}₂ₙ = R_{σB(2n)} by a permutation function σB of the user B. Details of the permutation functions σA and σB and the sequences of numbers of the users A and B will be described later.

### <Permutation Functions and Sequences of Numbers of Users A and B>

The permutation functions σA and σB are functions that result in the number of matching elements being equal to the number of non-matching elements. That is, the permutation functions σA and σB are functions in which n elements 1, 2, ..., n match and n elements (n + 1, n + 2, ..., 2n) and (2n + 1, 2n + 2, ..., 3n) do not match, as shown in the following expressions (1) and (2). Here, as shown in Equation (2), a value range of the permutation function σB is not a sequence of consecutive integers. As a result, for example, the permutation functions σA and σB need to be selected randomly so that they are one-to-one functions whose input is (1, ..., 2n) and whose output is expressed by expression (1) or expression (2). The permutation functions σA and σB are set in advance for the users A and B respectively and are assumed to be a secret. [Math. 1] $\begin{matrix}σA \left(j\right) ∈ \left\{1,2,⋯,n,n+1,n+2,⋯,2n\right\} & \left(1\right) \\ σB \left(j\right) ∈ \left\{1,2,⋯,n,2n+1,2n+2,⋯,3n\right\} & \left(2\right)\end{matrix}$

Hereinafter, the sequence of numbers of the user A and the sequence of numbers of the user B may respectively be referred to as a sequence R^{A}ⱼ of the user A and a sequence R^{B}ⱼ of the user B (where j = 1, 2, ..., 2n). The sequences R^{A}ⱼ and R^{B}ⱼ of the users A and B have a relationship as expressed by the following expressions (3) and (4). [Math. 2] $\begin{matrix}{R}_{1}^{A} = {R}_{σA \left(1\right)} , {R}_{2}^{A} = {R}_{σA \left(2\right)} , ⋯ , {R}_{2 n}^{A} = {R}_{σA \left(2n\right)} & \left(3\right) \\ {R}_{1}^{B} = {R}_{σB \left(1\right)} , {R}_{2}^{B} = {R}_{σB \left(2\right)} , ⋯ , {R}_{2 n}^{B} = {R}_{σB \left(2n\right)} & \left(4\right)\end{matrix}$

In the authentication system 1B, as shown by expressions (1) and (2), the permutation functions σA and σB that output n elements that are common and n elements that are different are set in advance. Further, in the authentication system 1B, as shown by the expressions (3) and (4), the users A and B may not know the elements n that they have in common. Due to such a property, in the authentication system 1B, when a message is falsified, the falsification is revealed. In principle, both the user A and user B may create a message that is consistent with a commitment deposited at the central management node 3. However, since the message prior to falsification is shared with the other user, a message that has been falsified may be revealed by calculating hash values of the message prior to and after falsification.

Returning to FIG. 7, description of the operation of the authentication system 1B will be continued.

In step S62, the first permutation part 321 of the central management node 3B encrypts the converted sequence R^{A}ⱼ of the user A with an OTP. The first permutation part 321 then transmits the encrypted sequence R^{A}ⱼ of the user A to the node 2B via the quantum key distribution network. Then, the sequence receiver 220 of the node 2B receives the encrypted sequence R^{A}ⱼ of the user A from the central management node 3B, and decrypts the received sequence R^{A}ⱼ of the user A with the OTP.

In step S63, the second permutation part 322 of the central management node 3B encrypts the converted sequence R^{B}ⱼ of the user B with an OTP. Then, the second permutation part 322 transmits the encrypted sequence R^{B}ⱼ of the user B to the node 4B via the quantum key distribution network. Then, the sequence receiver 420 of the node 4B receives the encrypted sequence R^{B}ⱼ of the user B from the central management node 3B, and decrypts the received sequence R^{B}ⱼ of the user B with the OTP.

In step S64, the message transmitter 221 of the node 2B encrypts a message m with an OTP. Then, the message transmitter 221 transmits the encrypted message m to the node 4B via the quantum key distribution network. Then, the message receiver 421 of the node 4B receives the encrypted message m from the node 2B, and decrypts the received message m with the OTP.

In step S65, the MAC value sequence calculator 222 of the node 2B calculates, from the message m, a first MAC value sequence using the sequence R^{A}ⱼ of the user A, as shown by the following expression (5). The first MAC value sequence consists of MAC values (keyed hash values) of the elements of the sequence R^{A}ⱼ .
[Math. 3] ${h}_{{R}_{j}^{A}} \left(m\right) = {h}_{{R}_{1}^{A}} \left(m\right) , {h}_{{R}_{2}^{A}} \left(m\right) , ⋯ , {h}_{{R}_{2 n}^{A}} \left(m\right)$ (5)

In step S66, the MAC value sequence calculator 222 of the node 2B encrypts the first MAC value sequence that has been calculated with an OTP. Then, the MAC value sequence calculator 222 transmits the first MAC value sequence that is encrypted to the central management node 3B via the quantum-key distribution network. Then, the match determiner 323 of the central management node 3B receives the first MAC value sequence that is encrypted from the node 2B, and decrypts the received first MAC value sequence with the OTP.

In step S67, the MAC value sequence calculator 422 of the node 4B calculates, from the message m', a second MAC value sequence using the sequence R^{B}ⱼ of the user B, as shown by the following expression (6).
[Math. 4] ${h}_{{R}_{j}^{B}} \left(m′\right) = {h}_{{R}_{1}^{B}} \left(m′\right) , {h}_{{R}_{2}^{B}} \left(m′\right) , ⋯ , {h}_{{R}_{2 n}^{B}} \left(m′\right)$ (6)

In step S68, the MAC value sequence calculator 422 of the node 4B encrypts the second MAC value sequence that has been calculated with an OTP. Then, the MAC value sequence calculator 422 transmits the second MAC value sequence that is encrypted to the central management node 3B via the quantum-key distribution network. Then, the match determiner 323 of the central management node 3B receives the second MAC value sequence that is encrypted from the node 4B, and decrypts the received second MAC value sequence with the OTP.

In step S69, the match determiner 323 of the central management node 3B determines whether elements of the first MAC value sequence and the second MAC value sequence all match. That is, the match determiner 323 determines whether the σA⁻¹ (j) - th element of the first MAC value sequence and the σB⁻¹ (j) - th element of the second MAC value sequence all match for j = 1, 2, ..., n.

When all of the elements match, the match determiner 323 determines that the message authentication has succeeded.

When any one or more of the elements do not match, the match determiner 323 performs the process from step S64 onward again.

In step S70, the match determiner 323 of the central management node 3B transmits a result of the determination of the message authentication to the node 2B via the public communication path.

In step S71, the match determiner 323 of the central management node 3B transmits the result of the determination of the message authentication to the node 4B via the public communication path.

In step S72, the message transmitter 221 of the node 2B determines whether the message m of the node 2B and the message m' of the node 4B match.

In step S73, when the messages m and m' do not match, the message transmitter 221 of the node 2B notifies the central management node 3 of the fact via the public communication path.

In step S74, the message receiver 421 of the node 4B determines whether the message m of the node 2B and the message m' of the node 4B match.

In step S75, when the messages m and m' do not match, the message receiver 421 of the node 4B notifies the central management node 3 of the fact via the public communication path.

In step S76, when the central management node 3B receives a notification that the messages m and m' do not match, the genuineness determiner 324 of the central management node 3B instructs the node 2B and the node 4B to send messages to the node 3B again, and recalculates the first MAC value sequence and the second MAC value sequence.

Here, the genuineness determiner 324 compares the first MAC value sequence (expression [5]) received from the user A with the first MAC value sequence recalculated by expression (7) below, and sets the number of matching elements to nA.
[Math. 5] ${h}_{{R}_{j}^{A}} \left(\overline{m}′\right) = {h}_{{R}_{1}^{A}} \left(\overline{m}′\right) , {h}_{{R}_{2}^{A}} \left(\overline{m}′\right) , ⋯ , {h}_{{R}_{2 n}^{A}} \left(\overline{m}′\right)$ (7)

The genuineness determiner 324 compares the second MAC value sequence (expression [6]) received from the user B with the second MAC value sequence recalculated by expression (8) below, and sets the number of matching elements to nB.
[Math. 6] ${h}_{{R}_{j}^{B}} \left(\overline{m}\right) = {h}_{{R}_{1}^{B}} \left(\overline{m}\right) , {h}_{{R}_{2}^{B}} \left(\overline{m}\right) , ⋯ , {h}_{{R}_{2 n}^{B}} \left(\overline{m}\right)$ (8)

Then, the genuineness determiner 324 checks the numbers of matching elements nA and nB and determines which of the users A and B is correct. More specifically, when nA = nB, the genuineness determiner 324 determines that it is unknown which of the users A and B is correct. When nA < nB, the genuineness determiner 324 determines that the user A is correct. When nA > nB, the genuineness determiner 312 determines that the user B is correct.

### [Effect]

As described above, according to the authentication system 1B of the second embodiment, similarly to the first embodiment, the key may be managed with ease, and genuineness of the users A and B may be determined.

### (Modification)

Embodiments have been described in detail, but the invention is not limited to the above-described embodiments. The invention may include embodiments with a design change or the like that is within a scope of the invention.

In the above-described embodiments, the number of users is two. However, the number of users may be m or more (where m ≥ 2, an integer that is greater than or equal to 2). In this case, the authentication system may generate a polynomial of degree (m-1) and determine whether the polynomial is satisfied.

### Example

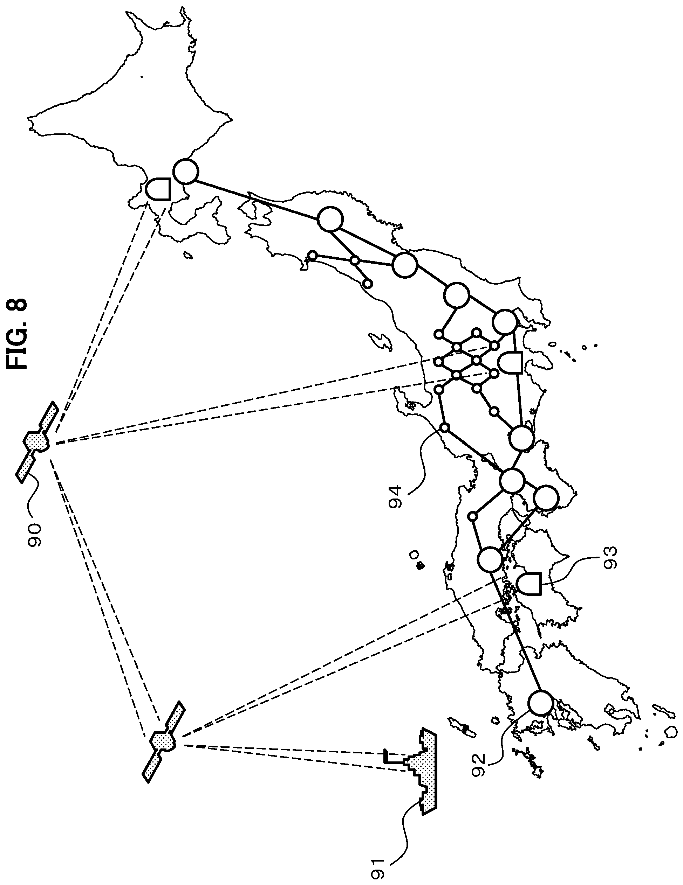

An example of the authentication system will be described with reference to FIG. 8.

By combining the quantum key distribution network that is capable of key sharing in an information-theoretically secure manner and the OTP encryption, data transmission that is information-theoretically secure is possible. However, in a case where information-theoretical another party authentication is not used, information-theoretical security cannot be ensured due to an attack on that vulnerability. Therefore, information-theoretical security is strongly required for another party authentication as well.

As shown in FIG. 8, a case is considered where the number of users increases and a quantum key distribution network is constructed across Japan. For example, the quantum key distribution network is configured to include a satellite station 90, a sea station 91, a large-scale relay node 92, an uplink station 93, and a small-scale relay node 94. In this case, with the conventional technology, since a large number of keys will have to be managed, it is difficult to apply a regular one-to-one another party authentication technology that is information-theoretically secure. In contrast, when the authentication system is used, the central management node manages key strings that correspond only to the number of users (the number of sites), and each user (site) manages only one key string, and thus an increase in the number of users may be accommodated.

### Reference Signs List

- 1, 1B: Authentication system
- 2, 2B: Node (transmission node)
- 3, 3B: Central management node (management node)
- 4, 4B: Node (reception node)
- 20: Another party authenticator
- 21, 22: Message authenticator
- 200: Another party authentication requester
- 201: Secret datum transmitter
- 202: Polynomial determiner
- 210: Random number receiver
- 211: Message transmitter
- 212: Operation part
- 213: MAC value calculator
- 220: Sequence receiver
- 221: Message transmitter
- 222: MAC value sequence calculator
- 30: Another party authenticator
- 31, 32: Message authenticator
- 300: Secure communication controller
- 301: Secret datum receiver
- 302: Share transmitter
- 303: Polynomial determiner
- 304: Another party authentication determiner
- 310: Random number transmitter
- 311: Match determiner
- 312: Genuineness determiner
- 320: Random number sequence generator
- 321: First permutation part
- 322: Second permutation part
- 323: Match determiner
- 324: Genuineness determiner
- 40: Another party authenticator
- 41, 42: Message authenticator
- 400: Another party authentication processor
- 401: Share receiver
- 402: Polynomial determiner
- 410: Random number receiver
- 411: Message receiver
- 412: Operation part
- 413: MAC value calculator
- 420: Sequence receiver
- 421: Message receiver
- 422: MAC value sequence calculator

## Claims

1. An authentication system (1, 1B) including, in a quantum key distribution network, a transmission node (2, 2B) of a transmission user who transmits a message, a reception node (4, 4B) of a reception user who receives the message, and a management node (3, 3B) that performs another party authentication and message authentication between users, wherein
the transmission node (2, 2B) includes:
an another party authentication requester (200) configured to request the management node (3, 3B) to perform another party authentication with the reception user;
a secret datum transmitter (201) configured to generate a predetermined secret datum, encrypt the secret datum with a one-time pad (OTP), and transmit the secret datum that is encrypted to the management node (3, 3B); and
a message authenticator (21, 22) configured to perform the message authentication,
the management node (3, 3B) includes:
a secure communication controller (300) configured to instruct the reception node (4, 4B) to start the another party authentication in response to a request from the transmission node (2, 2B);
a secret datum receiver (301) configured to receive the secret datum that is encrypted from the transmission node (2, 2B) and decrypt the secret datum that is encrypted;
a share transmitter (302) configured to generate, from the secret datum, a polynomial and shares that are in accordance with a number of users using threshold secret sharing, encrypt a share of the reception user with an OTP, and transmit the share of the reception user that is encrypted to the reception node (4, 4B); and
a message authenticator (31, 32) configured to perform the message authentication,
the reception node (4, 4B) includes:
an another party authentication processor (400) configured to start the another party authentication in response to an instruction from the management node (3, 3B);
a share receiver (401) configured to receive the share of the reception user that is encrypted from the management node (3, 3B) and decrypt the share of the reception user that is encrypted; and
a message authenticator (41, 42) configured to perform the message authentication,
the transmission node (2, 2B) includes:
a polynomial determiner (202) configured to: disclose the secret datum to the reception node (4, 4B) and the management node (3, 3B) via a public communication path that has been authenticated in advance by Wegman-Carter (WC) authentication; and check whether the polynomial holds,
the reception node (4, 4B) includes:
a polynomial determiner (402) configured to: disclose the share of the reception user to the transmission node (2, 2B) and the management node (3, 3B) via the public communication path; and determine whether the polynomial holds, and
the management node (3, 3B) includes:
a polynomial determiner (303) configured to: disclose a share of the transmission user to the transmission node (2, 2B) and the reception node (4, 4B) via the public communication path; and determine whether the polynomial holds; and
an another party authentication determiner (304) configured to determine that the another party authentication is successful when the polynomial holds at the transmission node (2, 2B), the reception node (4, 4B), and the management node (3, 3B).

2. The authentication system (1, 1B) according to claim 1, wherein
the polynomial determiner (303) of the management node (3, 3B) is configured to:
determine that the polynomial holds when the disclosed secret datum, the disclosed share of the reception user, and the disclosed share of the transmission user are positioned on a line representing the polynomial.

3. The authentication system (1) according to claim 1, wherein
the message authenticator (31) of the management node (3) includes:
a random number transmitter (310) configured to: generate a first random number, a second random number, and a third random number; encrypt the first random number, the second random number, and the third random number with an OTP; transmit the first random number and the second random number that are encrypted to the transmission node (2); and transmit the first random number and the third random number that are encrypted to the reception node (4),
the message authenticator (21) of the transmission node (2) includes:
a random number receiver (210) configured to: receive the first random number and the second random number that are encrypted from the management node (3); and decrypt the first random number and the second random number that are encrypted;
a message transmitter (211) configured to encrypt the message with an OTP and transmit the message that is encrypted to the reception node (4);
an operation part (212) configured to: calculate from the message a first MAC value using the first random number and a hash value using a cryptographic hash function; perform an operation of concatenation or exclusive or on the first MAC value and the hash value to obtain a first operation result; encrypt the first operation result with an OTP; and transmit the first operation result that is encrypted to the management node (3); and
a MAC value calculator (213) configured to: calculate from the message a second MAC value using the second random number; encrypt the second MAC value with an OTP; and transmit the second MAC value that is encrypted to the management node (3),
the message authenticator (41) of the reception node (4) includes:
a random number receiver (410) configured to: receive the first random number and the third random number that are encrypted from the management node (3); and decrypt the first random number and the third random number that are encrypted;
a message receiver (411) configured to receive the message that is encrypted from the transmission node (2) and decrypt the message that is encrypted;
an operation part (412) configured to: calculate from the message that has been received a first MAC value using the first random number and a hash value using a cryptographic hash function; perform an operation of concatenation or exclusive or on the first MAC value and the hash value to obtain a second operation result; encrypt the second operation result with an OTP; and transmit the second operation result that is encrypted to the management node (3); and
a MAC value calculator (413) configured to: calculate from the message a third MAC value using the third random number; encrypt the third MAC value with an OTP; and transmit the third MAC value that is encrypted to the management node (3), and
the message authenticator (31) of the management node (3) includes:
a match determiner (311) configured to: receive and decrypt the first and second operation results, the second MAC value, and the third MAC value from the transmission node (2) and the reception node (4); and determine whether the message authentication is successful based on the received first and second operation results, second MAC value, and third MAC value.

4. The authentication system (1) according to claim 3, wherein
the message authenticator (31) of the management node (3) includes:
a genuineness determiner (312) configured, in response to receiving a notification indicating that the messages do not match from at least one of the transmission node (2) or the reception node (4), to: recalculate the first MAC values, the second MAC values, the third MAC values, and the hash values from messages received from the transmission node (2) and the reception node (4); and determine genuineness of the users based on a result of the recalculation.

5. The authentication system (1B) according to claim 1, wherein
the message authenticator (32) of the management node (3B) includes:
a random number sequence generator (320) configured to generate a random number sequence;
a first permutation part (321) configured to: set in advance, for each of the transmission user and the reception user, a function of identifying a permutation in which a number of matching elements is equal to a number of non-matching elements; convert the random number sequence into a sequence of numbers with the function of identifying a permutation of the transmission user; encrypt with an OTP the sequence of numbers of the transmission user to which the random number sequence has been converted; and transmit the sequence of numbers of the transmission user that is encrypted to the transmission node (2B); and
a second permutation part (322) configured to: convert the random number sequence into a sequence of numbers with the function of identifying a permutation of the reception user; encrypt with an OTP the sequence of numbers of the reception user to which the random number sequence has been converted, and transmit the sequence of numbers of the reception user that is encrypted to the reception node (4B),
the message authenticator (22) of the transmission node (2B) includes:
a sequence receiver (220) configured to: receive the sequence of numbers of the transmission user that is encrypted from the management node (3B); and decrypt the sequence of numbers of the transmission user that is encrypted;
a message transmitter (221) configured to encrypt the message with an OTP and transmit the message that is encrypted to the reception node (4B); and
a MAC value sequence calculator (222) configured to: calculate from the message a first MAC value sequence using the sequence of numbers of the transmission user; encrypt the first MAC value sequence that has been calculated with an OTP; and transmit the first MAC value sequence that is encrypted to the management node (3B),
the message authenticator (42) of the reception node (4B) includes:
a sequence receiver (420) configured to: receive the sequence of numbers of the reception user that is encrypted from the management node (3B); and decrypt the sequence of numbers of the reception user that is encrypted;
a message receiver (421) configured to: receive the message that is encrypted from the transmission node (2B); and decrypt the message that is encrypted; and
a MAC value sequence calculator (422) configured to: calculate from the message that has been received a second MAC value sequence using the sequence of numbers of the reception user; encrypt the second MAC value sequence that has been calculated with an OTP; and transmit the second MAC value sequence that is encrypted to the management node (3B), and
the message authenticator (32) of the management node (3B) includes:
a match determiner (323) configured to: receive and decrypt the first MAC value sequence and the second MAC value sequence from the transmission node (2B) and the reception node (4B); and determine whether the message authentication is successful based on whether elements of the first MAC value sequence and the second MAC value sequence all match.

6. The authentication system (1B) according to claim 5, wherein
the message authenticator (32) of the management node (3B) includes:
a genuineness determiner (324) configured, in response to receiving a notification indicating that the messages do not match from at least one of the transmission node (2B) or the reception node (4B), to: recalculate the first MAC value sequence and the second MAC value sequence from messages received from the transmission node (2B) and the reception node (4B); and determine genuineness of the users based on a result of the recalculation.

## Patentansprüche

1. Ein Authentifizierungssystem (1, 1B), das in einem Quantenschlüsselverteilungsnetzwerk einen Sendeknoten (2, 2B) eines sendenden Nutzers (Sendernutzer), der eine Nachricht überträgt, einen Empfangsknoten (4, 4B) eines empfangenden Nutzers (Empfangsbenutzer), der die Nachricht empfängt, und einen Verwaltungsknoten (3, 3B) umfasst, der eine Gegenseitenauthentifizierung und eine Nachrichtenauthentifizierung zwischen den Nutzern durchführt, wobei
der Sendeknoten (2, 2B) umfasst:
einen Anforderer für die Authentifizierung der Gegenseite (200), der so konfiguriert ist, dass er den Verwaltungsknoten (3, 3B) auffordert, eine Authentifizierung der Gegenseite mit dem Empfangsbenutzer durchzuführen;
einen Geheimdatensender (201), der so konfiguriert ist, dass er ein vorbestimmtes Geheimdatenelement erzeugt, das Geheimdatenelement mit einem Einmal-Pad (OTP) verschlüsselt und das verschlüsselte Geheimdatenelement an den Verwaltungsknoten (3, 3B) überträgt; und
einen Nachrichtenauthentifikator (21, 22), der so konfiguriert ist, dass er die Nachrichtenauthentifizierung durchführt,
wobei der Verwaltungsknoten (3, 3B) umfasst:
eine sichere Kommunikationssteuerung (300), die so konfiguriert ist, dass sie den Empfangsknoten (4, 4B) anweist, die Authentifizierung der Gegenseite als Reaktion auf eine Anforderung vom Sendeknoten (2, 2B) zu starten;
einen Geheimdatenempfänger (301), der so konfiguriert ist, dass er das vom Sendeknoten (2, 2B) verschlüsselte Geheimdatenelement empfängt und das verschlüsselte Geheimdatenelement entschlüsselt;
einen Anteilesender (302), der so konfiguriert ist, dass er aus dem Geheimdatenelement ein Polynom und Anteile erzeugt, die einer Anzahl der Benutzer entsprechen, unter Verwendung der Schwellenwert-Geheimnisaufteilung, einen Anteil des Empfangsbenutzers mit einem OTP verschlüsselt und den verschlüsselten Anteil des Empfangsbenutzers an den Empfangsknoten (4, 4B) überträgt; und
einen Nachrichtenauthentifikator (31, 32), der so konfiguriert ist, dass er die Nachrichtenauthentifizierung durchführt,
wobei der Empfangsknoten (4, 4B) umfasst:
einen Authentifizierungsprozessor für die Gegenseite (400), der so konfiguriert ist, dass er die Authentifizierung der Gegenseite als Reaktion auf einen Befehl vom Verwaltungsknoten (3, 3B) startet;
einen Anteilempfänger (401), der so konfiguriert ist, dass er den vom Verwaltungsknoten (3, 3B) verschlüsselten Anteil des Empfangsbenutzers empfängt und den verschlüsselten Anteil des Empfangsbenutzers entschlüsselt; und
einen Nachrichtenauthentifikator (41, 42), der so konfiguriert ist, dass er die Nachrichtenauthentifizierung durchführt,
wobei der Sendeknoten (2, 2B) umfasst:
einen Polynom-Bestimmer (202), der so konfiguriert ist, dass er: das Geheimdatenelement an den Empfangsknoten (4, 4B) und den Verwaltungsknoten (3, 3B) über einen öffentlichen Kommunikationspfad offenlegt, der zuvor durch eine Wegman-Carter-Authentifizierung (WC) authentifiziert wurde; und prüft, ob das Polynom gilt,
wobei der Empfangsknoten (4, 4B) umfasst:
einen Polynom-Bestimmer (402), der so konfiguriert ist, dass er: den Anteil des Empfangsbenutzers über den öffentlichen Kommunikationspfad an den Sendeknoten (2, 2B) und den Verwaltungsknoten (3, 3B) offenlegt; und prüft, ob das Polynom gilt, und
wobei der Verwaltungsknoten (3, 3B) umfasst:
einen Polynom-Bestimmer (303), der so konfiguriert ist, dass er: einen Anteil des sendenden Benutzers über den öffentlichen Kommunikationspfad an den Sendeknoten (2, 2B) und den Empfangsknoten (4, 4B) offenlegt; und feststellt, ob das Polynom gilt; und
eine Authentifizierungsprüfeinheit (304) für die Gegenseite, die so konfiguriert ist, dass sie feststellt, dass die Authentifizierung der Gegenseite erfolgreich ist, wenn das Polynom am Sendeknoten (2, 2B), am Empfangsknoten (4, 4B) und am Verwaltungsknoten (3, 3B) gilt.

2. Das Authentifizierungssystem (1, 1B) nach Anspruch 1, wobei der Polynom-Bestimmer (303) des Verwaltungsknotens (3, 3B) so konfiguriert ist, dass er feststellt, dass das Polynom gilt, wenn das offen gelegte Geheimdatenelement, der offen gelegte Anteil des Empfangsbenutzers und der offen gelegte Anteil des Sendebenutzers auf einer das Polynom darstellenden Linie liegen.

3. Das Authentifizierungssystem (1) nach Anspruch 1, wobei
der Nachrichtenauthentifikator (31) des Verwaltungsknotens (3) umfasst:
einen Zufallszahlensender (310), der so konfiguriert ist, dass er: eine erste Zufallszahl, eine zweite Zufallszahl und eine dritte Zufallszahl erzeugt; die erste Zufallszahl, die zweite Zufallszahl und die dritte Zufallszahl mit einem OTP verschlüsselt; die verschlüsselte erste Zufallszahl und die verschlüsselte zweite Zufallszahl an den Sendeknoten (2) überträgt; und die verschlüsselte erste Zufallszahl und die verschlüsselte dritte Zufallszahl an den Empfangsknoten (4) überträgt,
der Nachrichtenauthentifikator (21) des Sendeknotens (2) umfasst:
einen Zufallszahl-Empfänger (210), der so konfiguriert ist, dass er: die erste Zufallszahl und die zweite Zufallszahl, die vom Verwaltungsknoten (3) verschlüsselt wurden, empfängt; und die verschlüsselte erste Zufallszahl und die verschlüsselte zweite Zufallszahl entschlüsselt;
einen Nachrichtensender (211), der so konfiguriert ist, dass er die Nachricht mit einem OTP verschlüsselt und die verschlüsselte Nachricht an den Empfangsknoten (4) überträgt;
einen Operationsabschnitt (212), der so konfiguriert ist, dass er: aus der Nachricht unter Verwendung der ersten Zufallszahl einen ersten MAC-Wert und unter Verwendung einer kryptografischen Hash-Funktion einen Hash-Wert berechnet; eine Verkettungs- oder Exklusiv-Oder-Operation auf den ersten MAC-Wert und den Hash-Wert anwendet, um ein erstes Operationsergebnis zu erhalten; das erste Operationsergebnis mit einem OTP verschlüsselt; und das verschlüsselte erste Operationsergebnis an den Verwaltungsknoten (3) überträgt; und
einen MAC-Wert-Rechner (213), der so konfiguriert ist, dass er: aus der Nachricht unter Verwendung der zweiten Zufallszahl einen zweiten MAC-Wert berechnet; den zweiten MAC-Wert mit einem OTP verschlüsselt; und den verschlüsselten zweiten MAC-Wert an den Verwaltungsknoten (3) überträgt,
wobei der Nachrichtenauthentifikator (41) des Empfangsknotens (4) umfasst:
einen Zufallszahl-Empfänger (410), der so konfiguriert ist, dass er: die erste Zufallszahl und die dritte Zufallszahl, die vom Verwaltungsknoten (3) verschlüsselt wurden, empfängt; und die erste Zufallszahl und die dritte Zufallszahl, die verschlüsselt wurden, entschlüsselt;
einen Nachrichtenempfänger (411), der so konfiguriert ist, dass er die vom Sendeknoten (2) verschlüsselte Nachricht empfängt und die verschlüsselte Nachricht entschlüsselt;
einen Operationsabschnitt (412), der so konfiguriert ist, dass er: aus der empfangenen Nachricht unter Verwendung der ersten Zufallszahl einen ersten MAC-Wert und unter Verwendung einer kryptografischen Hash-Funktion einen Hash-Wert berechnet; eine Verkettungs- oder Exklusiv-Oder-Operation auf den ersten MAC-Wert und den Hash-Wert anwendet, um ein zweites Operationsergebnis zu erhalten; das zweite Operationsergebnis mit einem OTP verschlüsselt; und das verschlüsselte zweite Operationsergebnis an den Verwaltungsknoten (3) überträgt; und
einen MAC-Wert-Rechner (413), der so konfiguriert ist, dass er: aus der Nachricht unter Verwendung der dritten Zufallszahl einen dritten MAC-Wert berechnet; den dritten MAC-Wert mit einem OTP verschlüsselt; und den verschlüsselten dritten MAC-Wert an den Verwaltungsknoten (3) überträgt, und
wobei der Nachrichtenauthentifikator (31) des Verwaltungsknotens (3) umfasst:
eine Übereinstimmungsprüfeinheit (311), die so konfiguriert ist, dass sie: das erste und das zweite Berechnungsergebnis, den zweiten MAC-Wert und den dritten MAC-Wert vom Sendeknoten (2) und vom Empfangsknoten (4) empfängt und entschlüsselt; und auf der Grundlage des empfangenen ersten und zweiten Berechnungsergebnisses, des zweiten MAC-Werts und des dritten MAC-Werts bestimmt, ob die Nachrichtenauthentifizierung erfolgreich ist.

4. Das Authentifizierungssystem (1) nach Anspruch 3, wobei der Nachrichtenauthentifikator (31) des Verwaltungsknotens (3) eine Echtheitsprüfungseinheit (312) umfasst, die so konfiguriert ist, dass sie als Reaktion auf den Empfang einer Benachrichtigung, die anzeigt, dass die Nachrichten von zumindest einem des Sendeknotens (2) oder des Empfangsknotens (4) nicht übereinstimmen, dann die ersten MAC-Werte, die zweiten MAC-Werte, die dritten MAC-Werte und die Hash-Werte aus den vom Sendeknoten (2) und vom Empfangsknoten (4) empfangenen Nachrichten neu berechnet; und die Echtheit der Benutzer auf der Grundlage eines Ergebnisses der Neuberechnung bestimmt.

5. Das Authentifizierungssystem (1B) nach Anspruch 1,
wobei der Nachrichtenauthentifikator (32) des Verwaltungsknotens (3B) umfasst:
einen Zufallszahlengenerator (320), der so konfiguriert ist, dass er eine Zufallszahlenfolge erzeugt;
einen ersten Permutationsabschnitt (321), der so konfiguriert ist, dass er: für den sendenden Nutzer und den Empfangsbenutzer jeweils im Voraus eine Funktion festlegt, mit der eine Permutation identifiziert wird, bei der eine Anzahl der übereinstimmenden Elemente gleich einer Anzahl der nicht übereinstimmenden Elemente ist; die Zufallszahlenfolge in eine Zahlenfolge mit der Funktion zur Identifizierung einer Permutation des sendenden Nutzers umwandelt; die Zahlenfolge des sendenden Nutzers, in die die Zufallszahlenfolge umgewandelt wurde, mit einem OTP verschlüsselt; und die verschlüsselte Zahlenfolge des sendenden Nutzers an den Sendeknoten (2B) zu überträgt; und
einen zweiten Permutationsabschnitt (322), der so konfiguriert ist, dass er: die Zufallszahlenfolge in eine Zahlenfolge mit der Funktion zur Identifizierung einer Permutation des Empfangsbenutzers umwandelt; die Zahlenfolge des Empfangsbenutzers, in die die Zufallszahlenfolge umgewandelt wurde, mit einem OTP verschlüsselt und die verschlüsselte Zahlenfolge des Empfangsbenutzers an den Empfangsknoten (4B) überträgt,
wobei der Nachrichtenauthentifikator (22) des Sendeknotens (2B) umfasst:
einen Sequenzempfänger (220), der so konfiguriert ist, dass er: die vom Verwaltungsknoten (3B) verschlüsselte Zahlenfolge des sendenden Benutzers empfängt; und die verschlüsselte Zahlenfolge des sendenden Benutzers entschlüsselt;
einen Nachrichtensender (221), der so konfiguriert ist, dass er die Nachricht mit einem OTP verschlüsselt und die verschlüsselte Nachricht an den Empfangsknoten (4B) überträgt; und
einen MAC-Wert-Sequenz-Rechner (222), der so konfiguriert ist, dass er: aus der Nachricht unter Verwendung der Zahlenfolge des sendenden Benutzers eine erste MAC-Wert-Folge berechnet; die berechnete erste MAC-Wert-Folge mit einem OTP verschlüsselt; und die verschlüsselte erste MAC-Wert-Folge an den Verwaltungsknoten (3B) überträgt,
wobei der Nachrichtenauthentifikator (42) des Empfangsknotens (4B) umfasst:
einen Sequenzempfänger (420), der so konfiguriert ist, dass er: die vom Verwaltungsknoten (3B) verschlüsselte Zahlenfolge des Empfangsbenutzers empfängt; und die verschlüsselte Zahlenfolge des Empfangsbenutzers entschlüsselt;
einen Nachrichtenempfänger (421), der so konfiguriert ist, dass er: die vom Sendeknoten (2B) verschlüsselte Nachricht empfängt; und die verschlüsselte Nachricht entschlüsselt; und
einen MAC-Wert-Sequenz-Rechner (422), der so konfiguriert ist, dass er: aus der empfangenen Nachricht unter Verwendung der Zahlenfolge des Empfangsbenutzers eine zweite MAC-Wert-Folge berechnet; die berechnete zweite MAC-Wert-Folge mit einem OTP verschlüsselt; und die verschlüsselte zweite MAC-Wert-Folge an den Verwaltungsknoten (3B) überträgt, und
wobei der Nachrichtenauthentifikator (32) des Verwaltungsknotens (3B) umfasst:
eine Übereinstimmungsprüfeinheit (323), die so konfiguriert ist, dass sie: die erste MAC-Wertfolge und die zweite MAC-Wertfolge vom Sendeknoten (2B) und vom Empfangsknoten (4B) empfängt und entschlüsselt; und auf der Grundlage der Frage, ob die Elemente der ersten MAC-Wertfolge und der zweiten MAC-Wertfolge vollständig übereinstimmen, bestimmt, ob die Nachrichtenauthentifizierung erfolgreich ist.

6. Das Authentifizierungssystem (1B) nach Anspruch 5, wobei der Nachrichtenauthentifikator (32) des Verwaltungsknotens (3B) eine Echtheitsprüfungseinheit (324) umfasst, die so konfiguriert ist, dass sie als Reaktion auf den Empfang einer Benachrichtigung, die anzeigt, dass die Nachrichten von zumindest einem des Sendeknotens (2B) oder des Empfangsknotens (4B) nicht übereinstimmen, die erste MAC-Wertfolge und die zweite MAC-Wertfolge aus den vom Sendeknoten (2B) und vom Empfangsknoten (4B) empfangenen Nachrichten neu berechnet; und die Echtheit der Benutzer auf der Grundlage eines Ergebnisses der Neuberechnung bestimmt.

## Revendications

1. Système d'authentification (1, 1B) comprenant, dans un réseau de distribution de clés quantiques, un nœud de transmission (2, 2B) d'un utilisateur de transmission qui transmet un message, un nœud de réception (4, 4B) d'un utilisateur récepteur qui reçoit le message, et un nœud de gestion (3, 3B) qui effectue l'authentification d'une autre partie et l'authentification du message entre les utilisateurs, dans lequel
le nœud de transmission (2, 2B) comprenant :
un demandeur d'authentification d'une autre partie (200) configuré pour demander au nœud de gestion (3, 3B) d'effectuer une authentification de l'autre partie avec l'utilisateur récepteur ;
un transmetteur de données secrètes (201) configuré pour générer une donnée secrète prédéterminée, chiffrer cette donnée secrète à l'aide d'un chiffrement à clé jetable à usage unique (OTP), et transmettre la donnée secrète ainsi chiffrée au nœud de gestion (3, 3B) ; et
un authentificateur de message (21, 22) configuré pour effectuer l'authentification du message,
le nœud de gestion (3, 3B) comprenant :
un contrôleur de communication sécurisée (300) configuré pour ordonner au nœud de réception (4, 4B) de lancer l'authentification de l'autre partie en réponse à une requête provenant du nœud de transmission (2, 2B) ;
un récepteur de données secrètes (301) configuré pour recevoir la donnée secrète chiffrée provenant du nœud de transmission (2, 2B) et pour déchiffrer cette donnée secrète ;
un transmetteur de parts (302) configuré pour générer, à partir de la donnée secrète, un polynôme et des parts correspondant à un nombre d'utilisateurs à l'aide d'un partage secret à seuil, pour chiffrer la part de l'utilisateur récepteur à l'aide d'un mot de passe à usage unique à usage unique (OTP), et pour transmettre la part de l'utilisateur récepteur ainsi chiffrée au nœud de réception (4, 4B) ; et
un authentificateur de message (31, 32) configuré pour effectuer l'authentification du message,
le nœud de réception (4, 4B) comprenant :
un processeur d'authentification de l'autre partie (400) configuré pour lancer l'authentification de l'autre partie en réponse à une instruction provenant du nœud de gestion (3, 3B) ;
un récepteur de parts (401) configuré pour recevoir la part de l'utilisateur récepteur chiffrée provenant du nœud de gestion (3, 3B) et pour déchiffrer ladite part chiffrée ; et
un authentificateur de message (41, 42) configuré pour effectuer l'authentification du message,
le nœud de transmission (2, 2B) comprenant :
un déterminateur de polynôme (202) configuré pour : divulguer la donnée secrète au nœud de réception (4, 4B) et au nœud de gestion (3, 3B) via un chemin de communication public ayant été préalablement authentifié par l'authentification de Wegman-Carter (WC) ; et vérifier si le polynôme est satisfait,
le nœud de réception (4, 4B) comprenant :
un déterminateur de polynôme (402) configuré pour : divulguer la part de l'utilisateur récepteur au nœud de transmission (2, 2B) et au nœud de gestion (3, 3B) via le chemin de communication public ; et déterminer si le polynôme est satisfait, et
le nœud de gestion (3, 3B) comprenant :
un déterminateur de polynôme (303) configuré pour : divulguer une part de l'utilisateur de transmission au nœud de transmission (2, 2B) et au nœud de réception (4, 4B) via le chemin de communication public ; et déterminer si le polynôme est satisfait ; et
un déterminateur de l'authentification de l'autre partie (304) configuré pour déterminer que l'authentification de l'autre partie a abouti lorsque le polynôme est satisfait au niveau du nœud de transmission (2, 2B), du nœud de réception (4, 4B) et du nœud de gestion (3, 3B).

2. Système d'authentification (1, 1B) selon la revendication 1, dans lequel le déterminateur de polynôme (303) du nœud de gestion (3, 3B) est configuré pour déterminer que le polynôme est satisfait lorsque la donnée secrète divulguée, la part divulguée de l'utilisateur de réception et la part divulguée de l'utilisateur de transmission se trouvent sur une ligne représentant le polynôme.

3. Système d'authentification (1) selon la revendication 1, dans lequel
l'authentificateur de message (31) du nœud de gestion (3) comprenant :
un transmetteur de nombres aléatoires (310) configuré pour : générer un premier nombre aléatoire, un deuxième nombre aléatoire et un troisième nombre aléatoire ; chiffrer le premier nombre aléatoire, le deuxième nombre aléatoire et le troisième nombre aléatoire à l'aide d'un mot de passe à usage unique (OTP) ; transmettre le premier nombre aléatoire et le deuxième nombre aléatoire chiffrés au nœud de transmission (2) ; et transmettre le premier nombre aléatoire et le troisième nombre aléatoire chiffrés au nœud de réception (4),
l'authentificateur de message (21) du nœud de transmission (2) comprenant :
un récepteur de nombres aléatoires (210) configuré pour : recevoir le premier nombre aléatoire et le deuxième nombre aléatoire, qui sont chiffrés, provenant du nœud de gestion (3) ; et déchiffrer le premier nombre aléatoire et le deuxième nombre aléatoire chiffrés ;
un transmetteur de messages (211) configuré pour chiffrer le message à l'aide d'un OTP et pour transmettre le message ainsi chiffré au nœud de réception (4) ;
une partie opérationnelle (212) configurée pour : calculer, à partir du message, une première valeur MAC à l'aide du premier nombre aléatoire et une valeur de hachage à l'aide d'une fonction de hachage cryptographique ; effectuer une opération de concaténation ou d'OR exclusif sur la première valeur MAC et la valeur de hachage afin d'obtenir un premier résultat d'opération ; chiffrer le premier résultat d'opération à l'aide d'un OTP ; et transmettre le premier résultat d'opération ainsi chiffré au nœud de gestion (3) ; et
un calculateur de valeur MAC (213) configuré pour : calculer, à partir du message, une deuxième valeur MAC à l'aide du deuxième nombre aléatoire ; chiffrer la deuxième valeur MAC à l'aide d'un OTP ; et transmettre la deuxième valeur MAC ainsi chiffrée au nœud de gestion (3),
l'authentificateur de message (41) du nœud de réception (4) comprenant :
un récepteur de nombres aléatoires (410) configuré pour : recevoir le premier nombre aléatoire et le troisième nombre aléatoire chiffrés provenant du nœud de gestion (3) ; et déchiffrer le premier nombre aléatoire et le troisième nombre aléatoire chiffrés ;
un récepteur de messages (411) configuré pour recevoir le message chiffré provenant du nœud de transmission (2) et pour déchiffrer ledit message chiffré ;
une partie opérationnelle (412) configurée pour : calculer, à partir du message reçu, une première valeur MAC à l'aide du premier nombre aléatoire et une valeur de hachage à l'aide d'une fonction de hachage cryptographique ; effectuer une opération de concaténation ou d'OR exclusif sur la première valeur MAC et la valeur de hachage afin d'obtenir un deuxième résultat d'opération ; chiffrer le deuxième résultat d'opération à l'aide d'un OTP ; et transmettre le deuxième résultat d'opération chiffré au nœud de gestion (3) ; et
un calculateur de valeur MAC (413) configuré pour : calculer, à partir du message, une troisième valeur MAC à l'aide du troisième nombre aléatoire ; chiffrer la troisième valeur MAC à l'aide d'un OTP ; et transmettre la troisième valeur MAC ainsi chiffrée au nœud de gestion (3), et
l'authentificateur de message (31) du nœud de gestion (3) comprenant :
un déterminateur de correspondance (311) configuré pour : recevoir et déchiffrer les premier et deuxième résultats d'opération, la deuxième valeur MAC et la troisième valeur MAC provenant du nœud de transmission (2) et du nœud de réception (4) ; et déterminer si l'authentification du message a abouti sur la base des premier et deuxième résultats d'opération, de la deuxième valeur MAC et de la troisième valeur MAC reçus.

4. Système d'authentification (1) selon la revendication 3, dans lequel l'authentificateur de messages (31) du nœud de gestion (3) comprend un déterminateur de l'authenticité (312) configuré, en réponse à la réception d'une notification indiquant que les messages ne correspondent pas, provenant d'au moins l'un parmi le nœud de transmission (2) et le nœud de réception (4), de : recalculer les premières valeurs MAC, les deuxièmes valeurs MAC, les troisièmes valeurs MAC et les valeurs de hachage à partir des messages reçus du nœud de transmission (2) et du nœud de réception (4) ; et de déterminer l'authenticité des utilisateurs sur la base d'un résultat de ce recalcul.

5. Système d'authentification (1B) selon la revendication 1, dans lequel
l'authentificateur de messages (32) du nœud de gestion (3B) comprend :
un générateur de séquences de nombres aléatoires (320) configuré pour générer une séquence de nombres aléatoires ;
une première partie de permutation (321) configurée pour : définir à l'avance, pour chacun des utilisateurs de transmission et récepteur, une fonction permettant d'identifier une permutation dans laquelle un nombre d'éléments correspondants est égal au nombre d'éléments non correspondants ; convertir la séquence de nombres aléatoires en une séquence de nombres à l'aide de la fonction permettant d'identifier une permutation de l'utilisateur de transmission ; chiffrer à l'aide d'un OTP la séquence de nombres de l'utilisateur de transmission dans laquelle la séquence de nombres aléatoires a été convertie ; et transmettre la séquence de nombres de l'utilisateur de transmission ainsi chiffrée au nœud de transmission (2B) ; et
une deuxième partie de permutation (322) configurée pour : convertir la séquence de nombres aléatoires en une séquence de nombres ayant pour fonction d'identifier une permutation de l'utilisateur récepteur ; chiffrer à l'aide d'un OTP la séquence de nombres de l'utilisateur récepteur en laquelle la séquence de nombres aléatoires a été convertie, et transmettre la séquence de nombres de l'utilisateur récepteur ainsi chiffrée au nœud de réception (4B),
l'authentificateur de message (22) du nœud d'émission (2B) comprenant :
un récepteur de séquence (220) configuré pour : recevoir la séquence de nombres de l'utilisateur de transmission chiffrée provenant du nœud de gestion (3B) ; et déchiffrer la séquence de nombres de l'utilisateur de transmission chiffrée ;
un transmetteur de messages (221) configuré pour chiffrer le message à l'aide d'un mot de passe à usage unique (OTP) et pour transmettre le message ainsi chiffré au nœud de réception (4B) ; et
un calculateur de séquence de valeurs MAC (222) configuré pour : calculer, à partir du message, une première séquence de valeurs MAC en utilisant la séquence de nombres de l'utilisateur de transmission ; chiffrer la première séquence de valeurs MAC ainsi calculée à l'aide d'un OTP ; et transmettre la première séquence de valeurs MAC ainsi chiffrée au nœud de gestion (3B),
l'authentificateur de message (42) du nœud de réception (4B) comprenant :
un récepteur de séquence (420) configuré pour : recevoir la séquence de nombres de l'utilisateur récepteur chiffrée provenant du nœud de gestion (3B) ; et déchiffrer la séquence de nombres de l'utilisateur récepteur chiffrée ;
un récepteur de messages (421) configuré pour : recevoir le message chiffré provenant du nœud de transmission (2B) ; et déchiffrer le message chiffré ; et
un calculateur de séquence de valeurs MAC (422) configuré pour : calculer, à partir du message reçu, une deuxième séquence de valeurs MAC en utilisant la séquence de nombres de l'utilisateur récepteur ; chiffrer la deuxième séquence de valeurs MAC ainsi calculée à l'aide d'un mot de passe à usage unique (OTP) ; et transmettre la deuxième séquence de valeurs MAC chiffrée au nœud de gestion (3B), et
l'authentificateur de message (32) du nœud de gestion (3B) comprenant :
un déterminateur de correspondance (323) configuré pour : recevoir et déchiffrer la première séquence de valeurs MAC et la deuxième séquence de valeurs MAC provenant du nœud de transmission (2B) et du nœud de réception (4B) ; et déterminer si l'authentification du message est réussie en fonction du fait que les éléments de la première séquence de valeurs MAC et de la deuxième séquence de valeurs MAC correspondent tous.

6. Système d'authentification (1B) selon la revendication 5, dans lequel l'authentificateur de message (32) du nœud de gestion (3B) comprend un déterminateur de l'authenticité (324) configuré, en réponse à la réception d'une notification indiquant que les messages ne correspondent pas, provenant d'au moins l'un parmi le nœud de transmission (2B) et le nœud de réception (4B), pour : recalculer la première séquence de valeurs MAC et la deuxième séquence de valeurs MAC à partir des messages reçus du nœud de transmission (2B) et du nœud de réception (4B) ; et déterminer l'authenticité des utilisateurs sur la base d'un résultat de ce recalcul.
